(19) Europäisches Patentamt
European Patent Office
Office européen des brevets

(11) **EP 3 352 130 A1**

(12) **EUROPEAN PATENT APPLICATION**
published in accordance with Art. 153(4) EPC

(43) Date of publication:
**25.07.2018 Bulletin 2018/30**

(51) Int Cl.:
***G06Q 50/10*** *(2012.01)*   ***G06Q 30/02*** *(2012.01)*

(21) Application number: **16845937.8**

(86) International application number:
**PCT/JP2016/004134**

(22) Date of filing: **12.09.2016**

(87) International publication number:
**WO 2017/047063 (23.03.2017 Gazette 2017/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.09.2015 JP 2015182608**

(71) Applicant: **NEC Corporation
Tokyo 108-8001 (JP)**

(72) Inventor: **ARAI, Masayuki
Tokyo 108-8001 (JP)**

(74) Representative: **MacDougall, Alan John Shaw et al
Mathys & Squire LLP
The Shard
32 London Bridge Street
London SE1 9SG (GB)**

(54) **INFORMATION PROCESSING DEVICE, EVALUATION METHOD AND PROGRAM STORAGE MEDIUM**

(57) The present invention enables the recognition of a display medium by a user to be evaluated using a method that is more in accordance with actual conditions. An information processing device (100) is provided with a first acquisition unit (110) that acquires the location information of a mobile terminal that has communicated with a wireless station correspondingly provided to a display medium, a second acquisition unit (120) that acquires configuration information for setting the recognition area of the display medium determined in accordance with at least one of the size, height, and orientation of the display medium, and a calculation unit (130) that calculates the recognition degree of the display medium on the basis of the acquired location information and the recognition area in accordance with the acquired configuration information.

## Fig.1

# Description

## [Technical Field]

The present invention relates to a technique for evaluating recognition of a display medium by a user.

## [Background Art]

Various attempts to evaluate (quantify) viewing of an advertisement and the like are known. For example, PTL 1 discloses an advertisement distribution system. In the advertisement distribution system, the number of portable terminals that communicate with a base station associated with a digital signage device in advance is assumed as the number of viewers of the digital signage.

## [Citation List]

## [Patent Literature]

**[PTL 1]** Japanese Laid-open Patent Publication No. 2012-098990

## [Summary of Invention]

## [Technical Problem]

The technique described in PTL 1 treats the number of portable terminals detected in a predetermined range around a digital signage device as the number of viewers. However, users at the periphery of the digital signage device are not necessarily the users actually viewing information distributed by the digital signage device.

One exemplary object of the present invention is to allow recognition of a display medium by a user to be evaluated in a way that more accurately reflects an actual state.

## [Solution to Problem]

An information processing device according to an example aspect of the invention includes:

a first acquisition unit that acquires position information of a mobile terminal that communicates with a wireless station provided in association with a display medium;
a second acquisition unit that acquires setting information to set a recognition area of the display medium, the recognition area being determined depending on at least one of a size, a height, and an orientation of the display medium; and
a calculation unit that calculates a recognition degree of the display medium based on the acquired position information and a recognition area depending on the acquired setting information.

An evaluation method according to another example aspect of the invention includes:

acquiring position information of a mobile terminal that communicates with a wireless station provided in association with a display medium;
acquiring setting information to set a recognition area of the display medium, the recognition area being determined depending on at least one of a size, a height, and an orientation of the display medium; and
calculating a recognition degree of the display medium based on the acquired position information and a recognition area depending on the acquired setting information.

A computer-readable program storage medium according to another example aspect of the invention stores a computer program causing a computer to execute:

acquiring position information of a mobile terminal that communicates with a wireless station provided in association with a display medium;
acquiring setting information to set a recognition area of the display medium, the recognition area being determined depending on at least one of a size, a height, and an orientation of the display medium; and
calculating a recognition degree of the display medium based on the acquired position information and a recognition area depending on the acquired setting information.

## [Advantageous Effects of Invention]

According to the present invention, recognition of a display medium by a user can be evaluated in a way that more accurately reflects an actual state.

## [Brief Description of Drawings]

Fig. 1 is a block diagram illustrating an example of a configuration of an information processing device.
Fig. 2 is a schematic diagram illustrating recognition areas.
Fig. 3 is a flowchart illustrating an example of an operation of the information processing device.
Fig. 4 is a block diagram illustrating an example of a configuration of an advertisement evaluation system.
Fig. 5 is a block diagram illustrating an example of a main configuration of a mobile terminal.
Fig. 6 is a diagram illustrating a data structure of setting information.
Fig. 7 is a sequence chart illustrating an example of processing performed in the advertisement evaluation system.

Fig. 8 is a block diagram illustrating an example of a hardware configuration of a computer device.

**[Description of Embodiments]**

[First Example Embodiment]

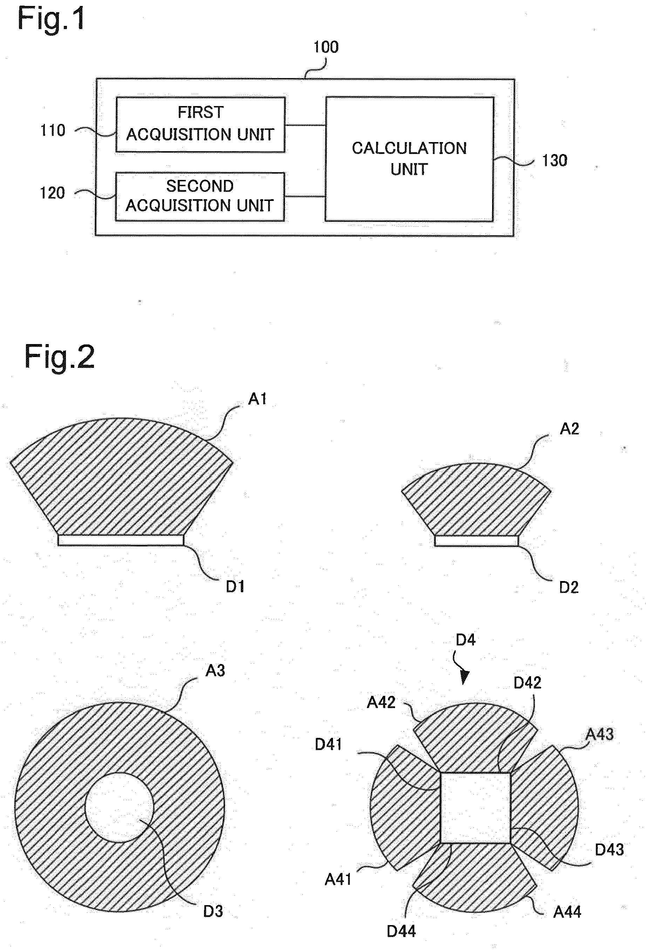

Fig. 1 is a block diagram illustrating a configuration of an information processing device 100 according to one example embodiment of the present invention. The information processing device 100 is a device to calculate the recognition degree of a display medium by user. The information processing device 100 includes a first acquisition unit 110, a second acquisition unit 120, and a calculation unit 130.

The display medium in the first example embodiment refers to a medium that displays information. The display medium may be a print medium or may be a display device that displays information in a rewritable manner. Specifically, such display media include, but not limited to, signboards, posters, digital signage (electronic signage), and the like. Further, a display medium may be a medium that is installed in a predetermined location or may be a mobile medium. Information displayed on the display medium includes, but not limited specifically to, advertisements, notifications, guide information, and the like. Information displayed on the display medium is not limited to information that has commercial purposes.

The display medium in the first example embodiment is associated with a particular wireless station. A plurality of wireless stations may be associated with the display medium. The wireless station is configured to exchange data with the information processing device 100. Further, the wireless station is also capable of communicating with mobile terminals located in a predetermined range. The mobile terminal is mobile phones, smartphones, or tablet terminals, for example. The mobile terminal may be so-called wearable terminals such as wristwatch-type or spectacle type terminal, as long as they include a communication function. Here, it is assumed that only one mobile terminal is associated with one user.

The first acquisition unit 110 acquires position information of mobile terminals. Specifically, the first acquisition unit 110 acquires position information of a mobile terminal that has communicated with a wireless station associated with a certain display medium. The position information is information that is acquired by using a navigation satellite system such as Global Positioning System (GPS), for example, and represents latitudes and longitudes. The first acquisition unit 110 may acquire position information from the mobile terminal or from a device other than mobile terminal. For example, the first acquisition unit 110 may acquire information that has been used for position registration from another device (a location register).

The second acquisition unit 120 acquires setting information for setting an area relating to recognition of the display medium. Such the area will be hereinafter referred to as "recognition area". The recognition area is an area that is set on the assumption that a user of the mobile terminal can recognize the display medium. The recognition area is determined in accordance with at least one of the size, height, and orientation of the display medium.

For example, in the case of outdoor advertisement, a larger display medium is generally more visible also to users far away from the display medium. Further, it can be said that the display medium located in a high position is more easily visible to users than the display medium in a low position because there may be less obstacles. Meanwhile, in a case of a planar display medium such as a flat-plate signboard, it is visible only to users in a certain direction with respect to the display medium. For example, such a signboard is not visible to users behind the signboard.

A recognition area in the first example embodiment is set based on the circumstances described above. The recognition area may be preset for each display medium. In this case, the setting information is information that represents the recognition area (such as the position and orientation of the display medium and the range of the recognition area). Alternatively, the setting information may be information required for setting the recognition area, such as the size, height, and orientation of the display medium. In this case, the calculation unit 130 calculates the recognition area that is based on the setting information to allow the recognition area to be set.

Fig. 2 is a schematic diagram illustrating recognition areas and representing a relation between each of the recognition areas and the display medium viewed from above. In this example, a display medium D1 is greater in size than a display medium D2. In this case, a recognition area A1 associated with the display medium D1 is wider in range than a recognition area A2 associated with the display medium D2.

Further, it is assumed that a display medium D3 is cylindrical in shape and is configured to rotate in such a way that information is visible from any direction. In this case, a recognition area A3 associated with the display medium D3 is not limited to a particular direction. On the other hand, a display medium D4 is configured in the shape of a square pillar that has display surfaces D41, D42, D43, and D44 where items of information different from one another are displayed. It is assumed that, unlike the display medium D3, the display medium D4 does not rotate. In this case, the recognition areas A41 to A44 associated with the display surfaces D41 to D44, respectively, are set.

The calculation unit 130 calculates recognition degree of the display medium based on the position information acquired by the first acquisition 110 and the recognition area depending on the setting information acquired by the second acquisition unit 120. The recognition degree herein refers to an indicator representing extent to which information displayed on the display medium has been recognized by users.

The recognition degree is the number of mobile terminals capable of acquiring the position information in a recognition area, for example. The number of mobile terminals here is equal to the number of users. Further, the calculation unit 130 may determine contribution of a user (i.e., a mobile terminal) with respect to the recognition degree based on other information acquired concerning each individual user. In other words, the calculation unit 130 may calculate the recognition degree by assigning a weight in accordance with each user.

One example of other information herein is information that represents a behavior of a user in the recognition area. For example, data representing move speed or the duration of a stay (the time period from entry into the recognition area to exit from the recognition area) of a user in the recognition area is an example of other information. Further, information representing move direction of a user in the recognition area may be another example of other information. For example, when a user is moving from a position near the recognition area toward a position away from the recognition area, it can be considered that the user is moving with their back to the display medium. The calculation unit 130 makes contribution of such a user with respect to the recognition degree to be lower (smaller) than the contribution of other users. The calculation unit 130 may assume that such a user is not recognizing the display medium and may cause the user not to contribute to the recognition degree (i.e., set the contribution to "0").

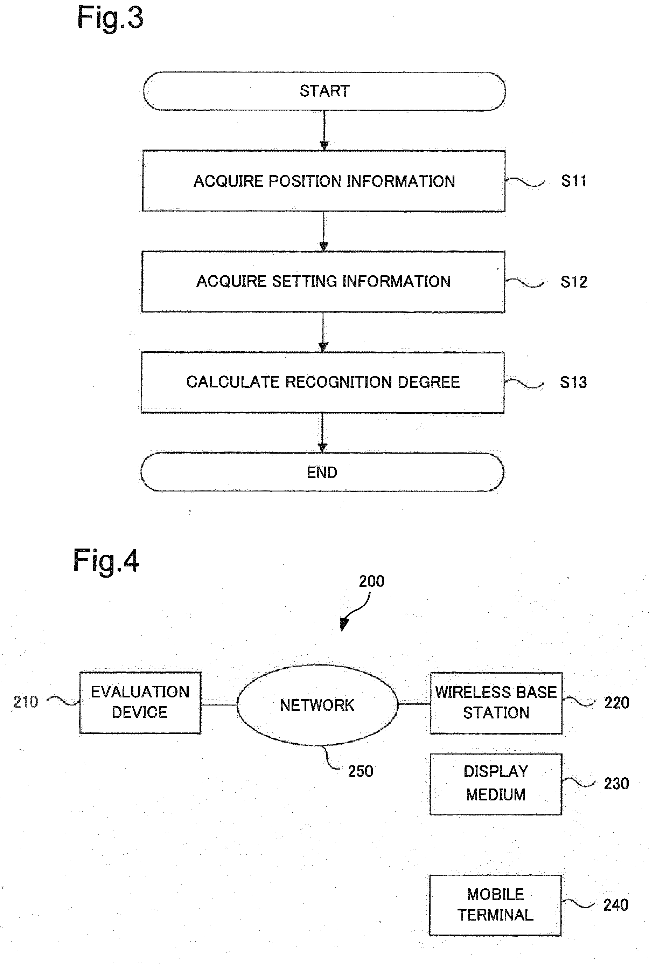

Fig. 3 is a flowchart illustrating an operation of the information processing device 100. The information processing device 100 performs the processing illustrated in Fig. 3 based on the position information acquired in a predetermined period of time such as in each day, each week, or each month, for example. Note that in the case where the display media to be calculated for the recognition degree is plural, the information processing device 100 performs the processing illustrated in Fig. 3 for each of the display media.

First, the first acquisition unit 110 reads out the position information acquired in a predetermined period of time (step S11). It is assumed here that the position information is stored in a predetermined storage device such as a database in association with each wireless-station (i.e., each display medium). The first acquisition unit 110 reads out the position information of a plurality of mobile terminals stored in the storage device at one time.

Then, the second acquisition unit 120 acquires the setting information of the display medium (step S12). The setting information may be stored in the information processing device 100 or another device. Note that the processing in step S12 may be performed before the processing in step S11.

Based on the setting information, the calculation unit 130 identifies the recognition area and calculates the recognition degree (step S13). Specifically, the calculation unit 130 extracts the mobile terminal whose position represented by the position information is in the recognition area from among mobile terminals that have communicated with a given wireless station and calculates the recognition degree based on information on the extracted mobile terminal.

As described above, the information processing device 100 according to the first example embodiment is capable of calculating the recognition degree based on the recognition area that is set for each display medium. Accordingly, the information processing device 100 is capable of calculating the recognition degree according to attributes (the size, height, or orientation) of the display medium and therefore allows recognition of the display medium by users to be evaluated in a way that more accurately reflects an actual state.

[Second Example Embodiment]

Fig. 4 is a block diagram illustrating a configuration of an advertisement evaluation system 200 according to another example embodiment of the present invention. The advertisement evaluation system 200 includes an evaluation device 210, a wireless base station 220, a display medium 230, and a mobile terminal 240. The evaluation device 210 and the wireless base station 220 are interconnected via a network 250. Note that the number of devices for each kind included in the advertisement evaluation system 200 is not limited to the number illustrated (i.e., one for each kind).

The display medium 230 displays an advertisement. The display medium 230 is constituted by a signboard, a liquid-crystal display, or a light emitting diode (LED) display installed alongside a street, for example, and is a digital signage installed on a wall surface of a building or the like. The display medium 230 may include the function of communicating with the wireless base station 220.

The wireless base station 220 is a wireless station that communicates with the mobile terminal 240. The wireless base station 220 is provided in association with the display medium 230. The wireless base station 220 is a so-called micro base station, for example. Further, the wireless base station 220 may be a mobile edge computing (MEC)-enabled base station.

The wireless base station 220 is capable of transmitting data received from the mobile terminal 240 to the evaluation device 210. Further, the wireless base station 220 stores the setting information concerning the display medium 230 and is capable of transmitting the setting information to the evaluation device 210. The wireless base station 220 may receive setting information from the display medium 230 or may store the setting information in advance.

The mobile terminal 240 is an electronic device carried by a user. The mobile terminal 240 may be, but not limited to, a mobile phone or a smartphone, for example. The mobile terminal 240 may be any electronic device that is capable of communicating with the wireless base station 220, including a device such as a portable digital media player or a game console.

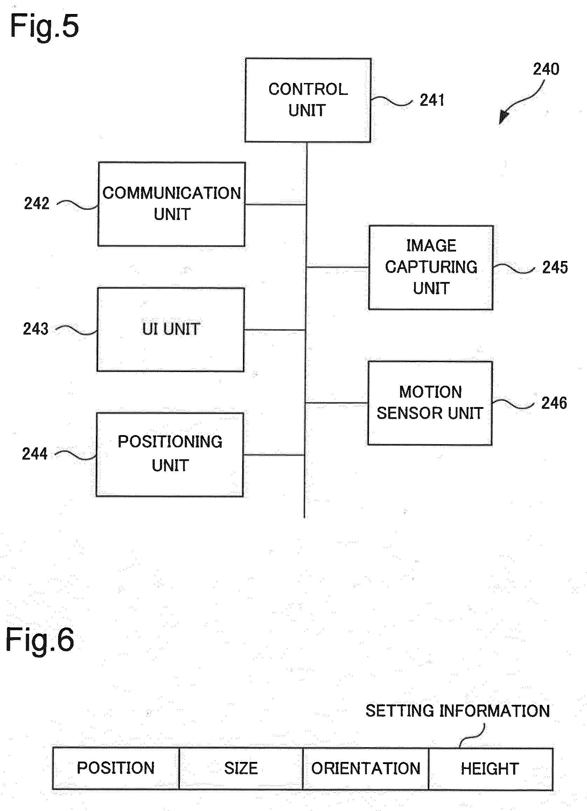

Fig. 5 is a block diagram illustrating a main configuration of the mobile terminal 240. The mobile terminal 240 includes a control unit 241, a communication unit 242, a user interface (UI) unit 243, a positioning unit 244, an image capturing unit 245, and a motion sensor unit 246. Note that the mobile terminal 240 does not necessarily need to include some of these components.

The control unit 241 controls operations of the components of the mobile terminal 240. The control unit 241 includes a processor such as a central processing unit (CPU) and a memory, and implements predetermined functions by executing program. The functions implemented by the control unit 241 may include functions such as transmitting data to the wireless base station 220 connected, viewing (browsing) web pages, and taking photographs, for example. The communication unit 242 communicates with the wireless base station 220.

The UI unit 243 accepts input from the user and outputs information to the user. The UI unit 243 includes a touch screen display, a microphone, a speaker, and the like. The UI unit 243 may accept input provided through operation of button or may accept voice input.

The positioning unit 244 measures the position of the mobile terminal 240. The positioning unit 244 calculates the position information by using GPS, for example. The image capturing unit 245 captures images. The image capturing unit 245 includes an image element such as a complementary metal oxide semiconductor (CMOS) image sensor, and generates image data.

Note that the mobile terminal 240 in the second example embodiment moves by being carried by the user. Accordingly, the position of the mobile terminal 240 can be considered to be the same as the position of the user. Therefore, in the second example embodiment, the position represented by the position information calculated by the positioning unit 244 is considered to be practically the same as the position of the user.

The motion sensor unit 246 detects a motion of the mobile terminal 240. The motion sensor 246 includes an acceleration sensor, a geomagnetism sensor, a gyro sensor, and the like, for example. Based on output from such sensor, the motion sensor unit 246 outputs motion information representing the motion of the mobile terminal 240.

The evaluation device 210 calculates the recognition degree of the display medium 230. The evaluation device 210 calculates the recognition degree of the display medium 230 by using the position information and the setting information of the mobile terminal received from the wireless base station 220. The evaluation device 210 is a server device, for example. The evaluation device 210 is an example of the information processing device 100 according to the first example embodiment. The evaluation device 210 has a configuration equivalent to the first acquisition unit 110, the second acquisition unit 120, and the calculation unit 130, described above. The evaluation unit 210 receives the position information and the setting information from the wireless base station 220.

Fig. 6 is a diagram illustrating an example of a data structure of the setting information. The setting information in second example is data representing the "position", "size", "orientation", and "height" of the display medium 230. The position of the display medium 230 can be expressed in latitude and longitude, for example. The size of the display medium 230 can be expressed by the long side length and the short side length of the display medium 230 in the case where the display medium 230 is a rectangle, for example. The orientation of the display medium 230 can be expressed by an azimuth angle with respect to a certain direction (the north, for example), for example. The height of the display medium 230 may be expressed by the height from the ground, for example.

The configuration of the advertisement evaluation system 200 is as described above. Under this configuration, the evaluation device 210 calculates the recognition degree of the display medium 230 based on the position information of the mobile terminal 240 and the setting information of the display medium 230. Note that, for convenience of explanation, it is assumed in the following description that the wireless base station 220 and the display medium 230 are installed so close to each other that they can be considered to be in the same position.

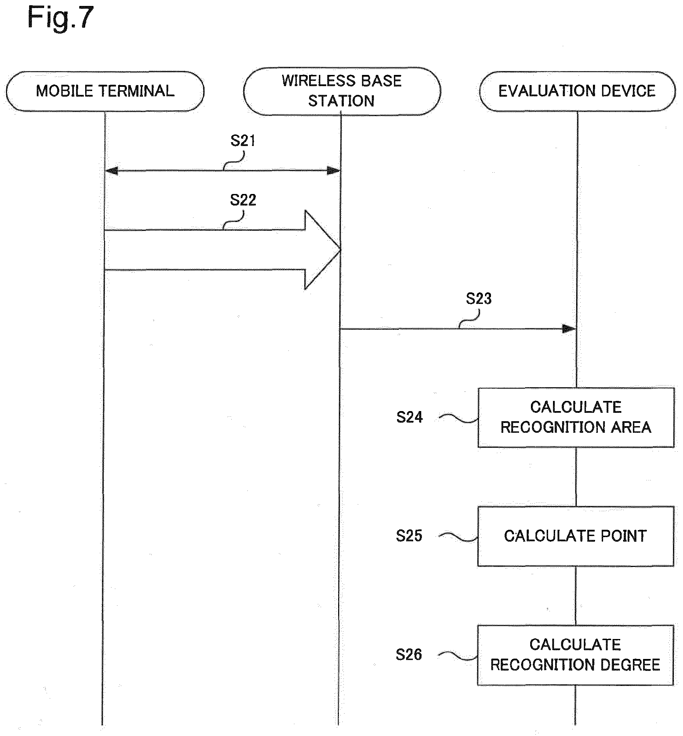

Fig. 7 is a sequence chart illustrating processing performed in the advertisement evaluation system 200. The processing illustrated in Fig. 7 is triggered when the mobile terminal 240 connects to the wireless base station 220 and starts communication with the wireless base station 220 (step S21). Establishing connection with the wireless base station 220 by the mobile terminal 240 will also be referred to as "attach" hereinafter. The mobile terminal 240 can perform wireless communication with the wireless base station 220 until the mobile terminal 240 exits the coverage of the wireless base station 220 attached.

Once the mobile terminal 240 attaches to the wireless base station 220, the mobile terminal 240 transmits data to the wireless base station 220 (step S22). Specifically, the mobile terminal 240 transmits at least the position information to the wireless base station 220. Further, the mobile terminal 240 may also transmit identification information for identifying the terminal (or its user) and motion information to the wireless base station 220. The mobile terminal 240 thereafter repeats transmission of data until the mobile terminal 240 exits the coverage of the wireless base station 220. The mobile terminal 240 transmits, to the wireless base station 220, the position information in association with a time at predetermined time intervals, for example.

The wireless base station 220 transmits data to the evaluation device 210 (step S23). The wireless base station 220 transmits, to the evaluation device 210, the data received from the mobile terminal 240 and also the setting information of the display medium 230. Note that the wireless base station 220 may transmit the setting information in advance (before the processing in step S22) to the evaluation device 210.

The wireless base station 220 may transmit data every time the wireless base station 220 receives the data from the mobile terminal 240 or may store data received from the mobile terminal 240 and transmit the data to the evaluation device 210 as a batch at an appropriate timing. For example, the wireless base station 220 may transmit data to the evaluation device 210 at regular intervals (every hour or every day, for example) or may transmit data received from the mobile terminal 240 to the evaluation device 210 as a batch when the terminal exits the coverage.

Note that in reality, there are a plurality of mobile terminals 240. Accordingly, the wireless base station 220 performs the processing described above for the plurality of mobile terminals 240. Further, there may be a plurality of wireless base stations 220 in different locations. In this case, the evaluation device 210 receives data from the plurality of wireless base stations 220.

When the evaluation device 210 receives the setting information of the display medium 230 from the wireless base station 220, the evaluation device 210 calculates the recognition area of the display medium 230 (step S24). Based on the setting information, the evaluation device 210 calculates the recognition area according to the "position", "size", "orientation", and "height" of the display medium 230 and sets the recognition area for the display medium 230.

The evaluation device 210 calculates points concerning the mobile terminal 240 based on the data transmitted from the mobile terminal 240 via the wireless base station 220 and the recognition area (step S25), and calculates the recognition degree of the display medium 230 by using the calculated points (step S26). Specifically, the evaluation device 210 calculates points representing the contribution of each individual mobile terminal 240 (i.e., the contribution of each user) and adds the calculated points together to obtain the recognition degree.

The points as referred to herein are calculated in accordance with equation (1) given below, for example. In equation (1), C is a predetermined constant and a common value is used for every mobile terminal 240. Further, $W_1$ to $W_4$ are weighting coefficients assigned to points P and have values that vary from one mobile terminal 240 to another. Note that the weighting coefficients $W_1$ to $W_4$ may be two alternative numerical values (i.e., numerical values that represent, in an alternative manner, whether or not a mobile terminal 240 contributes to the points P) or may be three or more alternative numerical values.

$$P = C + W_1 + W_2 + W_3 + W_4 \qquad (1)$$

The weighting coefficient $W_1$ is determined in accordance with the speed at which the mobile terminal 240 is moving in the recognition area (hereinafter referred to as the "move speed"). Note that the move speed can be calculated by using two or more pieces of the position information and the time at which each of the pieces of the position information is acquired. The move speed as referred to herein may be the average value of move speed of the mobile terminal 240 in the recognition area. The evaluation device 210 may calculate the move speed by using the motion information in addition to the position information.

For example, the possibility that the user of the mobile terminal 240 can recognize an advertisement when the mobile terminal 240 is moving at a low speed (at a speed about human walking speed, for example) may be higher than when the mobile terminal 240 is moving at a high speed (at a speed about running speed of car or bicycle, for example). Accordingly, the evaluation device 210 assigns a greater value to the weighting coefficient $W_1$ when the move speed is lower than or equal to a predetermined threshold than when the move speed is higher than the threshold.

The weighting coefficient $W_2$ is determined in accordance with the move speed of the mobile terminal 240 in the recognition area and the setting information used for calculating the recognition area. For example, in the case where the size of the display medium 230 is small with respect to the move speed, the user of the mobile terminal 240 is likely to be unable to visually recognize the display medium 230 to the extent that the user can actually understand information displayed on the display medium 230 even though the display medium 230 is visible to the user. Accordingly, the evaluation device 210 assigns a smaller value to the weighting coefficient $W_2$ when the move speed is higher than or equal to a predetermined threshold (which is determined in accordance with the size of the display medium 230) than when the move speed is lower than the threshold, for example.

The weighting coefficient $W_3$ is determined in accordance with the move direction of the mobile terminal 240 in the recognition area. Note that similar to the move speed, the move direction can be calculated by using two or more pieces of the position information and the time at which each of the pieces of the position information is acquired. The move direction as referred to herein may be calculated based on the position of the mobile terminal 240 at the time when the mobile terminal 240 enters the recognition area and the position of the mobile terminal 240 at the time when the mobile terminal 240 exits the recognition area. Alternatively, the move direction may be the direction in which the mobile terminal 240 moves for the longest period of time in the time period between the entry into the recognition area and the exit from the recognition area. The evaluation device 210 may calculate the move direction by using the motion information in addition to the position information.

For example, the user of the terminal is more likely to recognize the advertisement when the mobile terminal 240 is moving toward the display medium 230 than when the mobile terminal 240 is moving away from the display medium 230. For example, when the user is moving with their back to the display medium 230, the user is unlikely to visually recognize the display module 230. The evaluation device 210 therefore compares the orientation of the display medium 230 and the move direction, and assigns a smaller value to the weighting coefficient $W_3$ when the orientation and the move direction are less than or equal to predetermined thresholds than when they are greater than the thresholds.

The weighting coefficient $W_4$ is determined in accordance with the duration of the stay of the mobile terminal 240 in the recognition area. The duration of a stay herein refers to the length of time from entry of the mobile terminal 240 into the recognition area to exit from the recognition area. The longer the duration of the stay of the mobile terminal 240, the more chances there are for the user of the terminal 240 to visually recognize the display medium 230. Accordingly, the evaluation device 210 assigns a greater value to the weighting coefficient $W_4$ when the duration of the stay of the mobile terminal 240 is greater than or equal to a predetermined threshold than when the duration of the stay is less than the threshold.

The evaluation device 210 calculates the points P for all mobile terminals 240 that are attached to the wireless base station 220 associated with the display medium 230. After the evaluation device 210 calculates the points P, the evaluation device 210 calculates the recognition degree (A) in accordance with equation (2) given below in step S26. Here, n is the total number of mobile terminals 240 for which the points P are calculated during a predetermined period of time before the processing in step S26 is performed. The evaluation device 210 calculates the recognition degree for the display medium 230 in a predetermined time unit (such as each hour, each day, each day of the week, or previous one week). The evaluation device 210 may calculate the recognition degree every time points P are calculated or may calculate the recognition degree at the predetermined timing regardless of the timing for calculating the points P.

$$A = \sum_{i=1}^{n} P_i \qquad (2)$$

As described above, the advertisement evaluation system 200 is capable of calculating the recognition degree based on a movement mode of a user or relationship between the movement mode of a user and an attribute of the display medium 230 in addition to the recognition area set for each advertisement. The advertisement evaluation system 200 calculates the recognition degree A based on the points P that may vary from one mobile terminal 240 to another. Accordingly, the advertisement evaluation system 200 allows recognition of the display medium 230 by users to be evaluated in a way that more accurately reflects an actual state than a case where the recognition is evaluated based only on the number of mobile terminals 240 that enters the recognition area (i.e., without changing weighting).

[Modified Examples]

Embodiments of the present invention are not limited to the example embodiment described above. Embodiments of the present invention may include modified examples described below, for example. Further, embodiments of the present invention may be combinations obtained by combining the example embodiments and modified examples described herein as needed. For example, a modification described with reference to a certain example embodiment is also applicable to other example embodiments.

(Modified Example 1)

A user may carry a plurality of terminals. For example, a user may carry a wearable terminal in addition to the mobile terminal 240 that has a configuration as illustrated in Fig. 5. In this case, the mobile terminal 240 may receive data from the wearable terminal and may transmit the received data to the evaluation device 210.

For example, in the case where the wearable terminal referred to herein is a spectacle-type terminal and includes the function of detecting a sight direction (the direction in which the user turns their eyes) or an inclination of the head of the user, the mobile terminal 240 may receive data representing the sight direction or a head inclination detected using the function from the wearable terminal. The mobile terminal 240 may transmit these data to the evaluation device 210 as the motion information. The evaluation device 210 may calculate certainty (likelihood) that the user visually recognizes the display medium 230 based on the motion information and may reflect the certainty (likelihood) in the points P. Specifically, when the user is likely to be visually recognizing the display medium 230, the evaluation device 210 increases the points P of the user.

Further, in the case where the wearable terminal includes the function of capturing images of an object located in the sight direction of the user, the mobile terminal 240 may receive image data acquired by the function from the wearable terminal. When the evaluation device 210 receives image data from the mobile terminal 240, the evaluation device 210 may determine whether or not an image represented by the image data contains the display medium 230. When the image of the display medium 230 is captured, the evaluation device 210 determines that the user visually recognizes the display medium 230 and increases the points P of the user. Note that the evaluation device 210 may make the determination based on a well-known object recognition technique or may make the determination by recognizing predetermined characters or graphics presented on or near the display medium 230. Predetermined graphics as referred to herein may be coded information (such as a QR code (registered trademark)) representing particular information such as a uniform resource locator (URL).

Note that the wearable terminal described in the present modified example may be integrated with the mobile terminal 240 instead of being separate from the mobile terminal 240.

(Modified Example 2)

The display medium 230 may include the function of outputting sound corresponding to displayed information. A mobile terminal 240 may acquire the sound using a microphone and may transmit sound data to an evaluation device 210. The evaluation device 210 may analyze the sound data and when the evaluation device 210 determines that the sound data includes sound output from the display medium 230, the evaluation device 210 may add a value of weighting to the points P

Note that sound as referred to herein does not need to be sound in a human audible spectrum. In other words, the display medium 230 may output particular information by which the display medium 230 can be identified as sound (such as ultrasound) that does not cause auditory sensation to humans who have normal hearing.

(Modified Example 3)

The evaluation device 210 may determine the contribution of a user with respect to the recognition degree based on whether or not a predetermined operation is performed on the mobile terminal 240. A predetermined operation as referred to herein is an operation that correlates with certainty that the user visually recognizes the display medium 230. Such an operation may be an operation for accessing a given web page using a URL presented on or near the display medium 230, for example. An image of the URL coded in the form of a QR code or the like may be captured by the mobile terminal 240.

(Modified Example 4)

The wireless base station 220 may include the function of controlling a communication range (coverage). For example, the wireless base station 220 may be able to set a radio-wave reachable range (radius) and/or directivity. Further, the wireless base station 220 may read setting information and may control a communication range in such a way that the communication range becomes an optimum range for a recognition area.

(Modified Example 5)

The wireless base station 220 may include some or all of the functions of the evaluation device 210. For example, the wireless base station 220 may include the function of identifying the recognition area and the function of identifying a position represented by the position information. In this case, the wireless base station 220 may transmit, to the evaluation device 210, the position information and the like only of mobile terminals 240 that enters the recognition area rather than the position information and the like of all mobile terminals 240 that are attached to the wireless base station 220. Note that in the case where the wireless base station 220 includes all of the functions included in the evaluation device 210, the evaluation device 210 is not necessary.

(Modified Example 6)

A wide variety of variations of the specific hardware configurations of the devices described in the first and second example embodiments are conceivable and the hardware configurations of the devices are not limited to particular configurations. For example, the information processing device 100 of the first example embodiment and the evaluation device 210 of the second example embodiment may be implemented in cooperation with a plurality of devices.

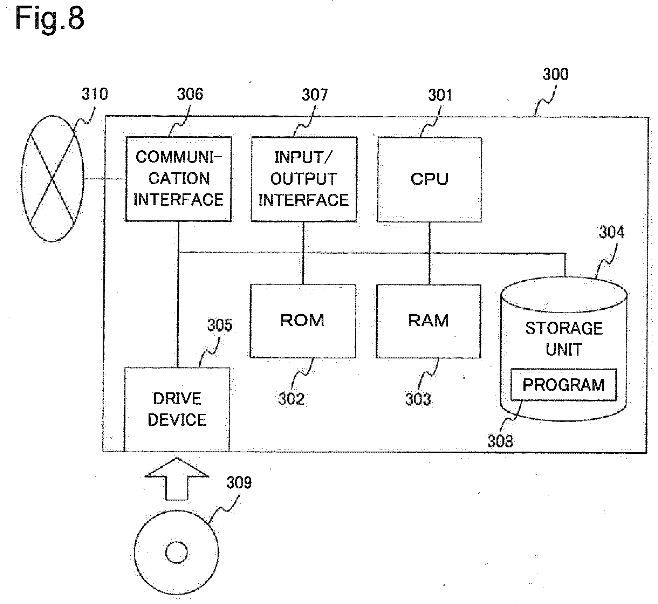

Fig. 8 is a block diagram illustrating a hardware configuration of a computer device 300 that implements the information processing device 100 or the evaluation device 210. The computer device 300 includes a central processing unit (CPU) 301, a read only memory (ROM) 302, a random access memory (RAM) 303, a storage device 304, a drive device 305, a communication interface 306, and an input/output interface 307.

The CPU 301 executes a program 308 using the RAM 303. The program 308 may be stored in the ROM 302. Further, the program 308 may be recorded on a storage medium 309 and may be read out by the drive device 305 or may be transmitted from an external device via a network 310. The communication interface 306 exchanges data with external devices via the network 310. The input/output interface 307 exchanges data with peripheral devices (such as a keyboard, a mouse, and a display device). Each of the communication interface 306 and the input/output interface 307 can function as a means that acquires or outputs data.

Note that some or all of the components of the information processing device 100 or the evaluation device 210 may be implemented by general-purpose or dedicated circuitry, a processor and the like, or a combination of them. The components of the information processing device 100 or the evaluation device 210 may be constituted by a single chip or a plurality of chips. Further, some or all of the components of the information processing device 100 or the evaluation device 210 may be implemented by a combination of the circuitry and the like mentioned above and a program.

The present invention has been described using the example embodiments described above as model examples. However, the present invention is not limited to the example embodiments described above. Specifically, the present invention can employ various modes that can be understood by those skilled in the art within the scope of the present invention.

This application is based upon and claims the benefit of priority from Japanese Patent Application No. 2015-182608 filed on September 16, 2015, the entire disclosure of which is incorporated herein.

**[Reference Signs List]**

> 100 Information processing device
> 110 First acquisition unit
> 120 Second acquisition unit
> 130 Calculation unit
> 200 Advertisement evaluation system
> 210 Evaluation device
> 220 Wireless base station
> 230 Display medium
> 240 Mobile terminal
> 300 Computer device

**Claims**

1. An information processing device comprising:

> first acquisition means for acquiring position information of a mobile terminal that communicates with a wireless station provided in association with a display medium;
> second acquisition means for acquiring setting information to set a recognition area of the display medium, the recognition area being determined depending on at least one of a size, a height, and an orientation of the display medium; and
> calculation means for calculating a recognition degree of the display medium based on the acquired position information and a recognition area depending on the acquired setting information.

2. The information processing device according to claim 1, wherein the calculation means calculates the recognition degree using a number of the mobile terminals in the recognition area, the number of the mobile terminals is based on the position information of the mobile terminal in the recognition area.

3. The information processing device according to claim 1 or 2, wherein the calculation means determines contribution of the mobile terminal concerning calculation of the recognition degree, the contribution depends on move speed of the mobile terminal in the recognition area.

4. The information processing device according to claim 3, wherein the contribution which is determined by the calculation means depends on not only the move speed of the mobile terminal in the recognition area but also the setting information.

5. The information processing device according to any one of claims 1 to 4, wherein the calculation means determines contribution of the mobile terminal concerning calculation of the recognition degree, the contribution depends on move direction of the mobile terminal in the recognition area.

6. The information processing device according to any one of claims 1 to 5, wherein the first acquisition means acquires the position information and related information on a sight direction of a user of the mobile terminal, and
the calculation means determines contribution of the mobile terminal concerning calculation of the recognition degree, the contribution depends on the acquired related information on the sight direction of the user.

7. The information processing device according to any one of claims 1 to 6, wherein the calculation means determines contribution of the mobile terminal concerning calculation of the recognition degree, the contribution depends on a time period from entry of the mobile terminal into the recognition area to exit of the mobile terminal from the recognition area.

8. The information processing device according to any one of claims 1 to 7, wherein the calculation means determines contribution of the mobile terminal concerning calculation of the recognition degree, the contribution depends on whether or not a predetermined operation associated with the display medium is performed on the mobile terminal.

9. An evaluation method comprising:

> acquiring position information of a mobile terminal that communicates with a wireless station provided in association with a display medium;
> acquiring setting information to set a recognition area of the display medium, the recognition area being determined depending on at least one of a size, a height, and an orientation of the display medium; and
> calculating a recognition degree of the display medium based on the acquired position information and a recognition area depending on the acquired setting information.

10. A computer-readable program storage medium storing a computer program causing a computer to execute:

acquiring position information of a mobile terminal that communicates with a wireless station provided in association with a display medium; acquiring setting information to set a recognition area of the display medium, the recognition area being determined depending on at least one of a size, a height, and an orientation of the display medium; and

calculating a recognition degree of the display medium based on the acquired position information and a recognition area depending on the acquired setting information.

# Fig.1

# Fig.2

# Fig.3

```
┌──────────────────────────────────┐
│              START               │
└──────────────────────────────────┘
                 │
                 ▼
┌──────────────────────────────────┐
│   ACQUIRE POSITION INFORMATION   │─────  S11
└──────────────────────────────────┘
                 │
                 ▼
┌──────────────────────────────────┐
│   ACQUIRE SETTING INFORMATION    │─────  S12
└──────────────────────────────────┘
                 │
                 ▼
┌──────────────────────────────────┐
│   CALCULATE RECOGNITION DEGREE   │─────  S13
└──────────────────────────────────┘
                 │
                 ▼
┌──────────────────────────────────┐
│               END                │
└──────────────────────────────────┘
```

# Fig.4

```
                                         200

210 ── EVALUATION        NETWORK      WIRELESS BASE ── 220
        DEVICE                         STATION
                           │
                          250         DISPLAY       ── 230
                                      MEDIUM


                                      MOBILE        ── 240
                                      TERMINAL
```

# Fig.5

# Fig.6

SETTING INFORMATION

| POSITION | SIZE | ORIENTATION | HEIGHT |
|----------|------|-------------|--------|

# Fig.7

MOBILE TERMINAL

WIRELESS BASE STATION

EVALUATION DEVICE

S21

S22

S23

S24 — CALCULATE RECOGNITION AREA

S25 — CALCULATE POINT

S26 — CALCULATE RECOGNITION DEGREE

# Fig.8

COMMUNI-
CATION
INTERFACE

INPUT/
OUTPUT
INTERFACE

CPU

ROM

RAM

STORAGE
UNIT

PROGRAM

DRIVE
DEVICE

310  306  307  301  300  304  305  302  303  308  309

## INTERNATIONAL SEARCH REPORT

| International application No. |
|---|
| PCT/JP2016/004134 |

**A. CLASSIFICATION OF SUBJECT MATTER**
*G06Q50/10(2012.01)i, G06Q30/02(2012.01)i*

According to International Patent Classification (IPC) or to both national classification and IPC

**B. FIELDS SEARCHED**

Minimum documentation searched (classification system followed by classification symbols)
G06Q50/10, G06Q30/02

Documentation searched other than minimum documentation to the extent that such documents are included in the fields searched
Jitsuyo Shinan Koho        1922–1996    Jitsuyo Shinan Toroku Koho   1996–2016
Kokai Jitsuyo Shinan Koho   1971–2016    Toroku Jitsuyo Shinan Koho    1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2011-525258 A   (Qualcomm Inc.),<br>15 September 2011 (15.09.2011),<br>paragraphs [0009], [0016] to [0035]; fig. 1<br>& US 2009/0197616 A1<br>paragraphs [0009], [0032] to [0051]<br>& WO 2009/099875 A2      & EP 2277136 A2<br>& KR 10-2010-0116650 A   & CN 102027498 A | 1-2,9-10<br>3-5,7-8<br>6 |
| Y<br>A | JP 2011-243023 A   (NEC BIGLOBE, Ltd.),<br>01 December 2011 (01.12.2011),<br>paragraphs [0048] to [0051], [0088]<br>(Family: none) | 3-5,7-8<br>6 |
| Y<br>A | JP 2011-78014 A   (Softbank BB Corp.),<br>14 April 2011 (14.04.2011),<br>paragraphs [0022] to [0038]<br>(Family: none) | 7-8<br>6 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    24 November 2016 (24.11.16) | Date of mailing of the international search report<br>    06 December 2016 (06.12.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

## INTERNATIONAL SEARCH REPORT

| International application No. |
| --- |
| PCT/JP2016/004134 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 2014/0236728 A1  (SEELN SYSTEMS, INC.), 21 August 2014 (21.08.2014), paragraphs [0069] to [0072], [0084], [0093] to [0101] & WO 2014/130734 A1 | 1-10 |
| A | JP 2015-060580 A  (Yahoo Japan Corp.), 30 March 2015 (30.03.2015), paragraphs [0031] to [0038] & US 2015/0088637 A1 paragraphs [0044] to [0051] | 1-10 |
| A | US 2015/0081421 A1  (VERISON PATENT AND LICENSING INC.), 19 March 2015 (19.03.2015), paragraphs [0010] to [0012] (Family: none) | 1-10 |
| A | JP 2013-178820 A  (Yahoo Japan Corp.), 09 September 2013 (09.09.2013), paragraphs [0013] to [0029] (Family: none) | 1-10 |
| A | JP 2012-98991 A  (Yahoo Japan Corp.), 24 May 2012 (24.05.2012), paragraphs [0017] to [0024] (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012098990 A

- JP 2015182608 A